# EUROPEAN PATENT APPLICATION

(11) **EP 1 513 060 A1**
(43) Date of publication of application: **09.03.2005**
(21) Application number: 03077826.0
(22) Date of filing: 08.09.2003
(51) Int. Cl.: G06F 3/14

(54) **Large-area display system, modular unit used therein and method of operating the display**

(71) Applicant: BARCO N.V., 8500 Kortrijk (BE)
(72) Inventor: Devos, Bruno, 9870 Zulte (BE); Van Hille, Herbert, Cambridge MA 02138-5321 (US); Dedene, Nele, 3530 Houthalen-Helchteren (BE); Willem, Patrick, 8500 Oostende (BE); Thielemans, Robbie, 9810 Nazareth (BE)
(74) Representative: Donné, Eddy

(57) **Abstract**

Configurable large-area display system with a display (114) comprising a plurality of sub-displays that each contain an array of pixels (122), characterized in that it further comprises a central controller hardware and software block (110) containing software to control the display system (100) and to generate control data and video signals to be displayed on the display (114); a digitizer (112) that converts said control data and video signals to a digital signal compatible with the display (114); whereby the digitized control data and video signals are passed from one sub-display to the next, and whereby each sub-display is a control unit (116) capable of controlling the individual pixels (122) of said control unit (116) as a function of its position within the display (114) and of the received control data and video signals.

## Description

### FIELD OF THE INVENTION

The present invention relates to a configurable large-area display system. In particular, the present invention relates to a large-area display system for forming two-dimensional or three-dimensional displays using any addressable display technology, like light-emitting diode (LED) technology, or such.

The invention relates also to a control unit used in the display system and also to a method of operating the display.

### BACKGROUND OF THE INVENTION

Conventional incandescent lamps, fluorescent lamps and neon tubes have long been used to illuminate many large-scale commercial and public signs. The market is now, however, demanding larger displays with the flexibility to customize display sizes and colors that are not possible with these older technologies. As a result, many displays now utilize LEDs in their design because LEDs consume less electrical energy than conventional light sources and possess a much longer lifetime with lower maintenance costs.

LED technology is currently being applied to large-scale display applications, such as outdoor or indoor stadium displays, large marketing advertisement displays, and mass-public informational displays. Many of these large-scale applications are dynamically reconfigurable under computer control. In addition, some large-scale animated displays that are capable of displaying video imaging are now being produced.

Furthermore, there is a demand in the market not only for two-dimensional (2D) displays, but also for three-dimensional (3D) displays. Technical challenges exist in forming a display system with the flexibility to form various 2D or 3D shapes and, furthermore, in providing control of such a system. What is needed, is a system of individual picture elements that are configurable to form LED displays having 2D or 3D shapes. Furthermore, for a given application, any desired change in a physical display layout typically requires a display redesign, which is costly and time consuming. What is needed is a system of individual picture elements having variable distance between pixels, thereby providing a software-configurable display without display redesign.

An example of a configurable large-area display is found in reference to European Patent No. 1.057.220, entitled, "Tiled electronic display structure." EP 1.057.220 describes a tiled display device that is formed from display tiles having picture element (pixel) positions defined up to the edge of the tiles. Each pixel position has an organic light-emitting diode (OLED) active area that occupies approximately twenty-five percent of the pixel area. Each tile includes a memory that stores display data and pixel driving circuitry that controls the scanning and illumination of the pixels on the tile. The pixel driving circuitry is located on the back side of the tile and connections to pixel electrodes on the front side of the tile are made by vias that pass through portions of selected ones of the pixel areas that are not occupied by the active pixel material. The tiles are formed in two parts - an electronics section and a display section. Each tile has a glass substrate on the front of the tile. Black matrix lines are formed on the front of the glass substrate. The tiles are joined by mullions that have the same appearance as the black matrix lines.

While EP 1.057.220 describes a configurable large-area display formed of tiled arrays, the dimensions of the individual tiles are sufficiently large that custom shapes, including 3D shapes, are not possible. Furthermore, the control system of the tiled display of EP 1.057.220 is not suitable for controlling and reconfiguring individual picture elements.

### SUMMARY OF THE INVENTION

It is an object of this invention to provide a display system for controlling individual pixels instead of individual tiles.

It is yet another object of this invention to provide a display system having variable distance between pixels, thereby providing a software-configurable display, which thus does not require any redesign for each geometrically different design.

It is yet another object of this invention to provide a display system, which does not require any predefined or regularly spaced position for the individual pixels.

To this end the present invention provides for a configurable large-area display system with a display comprising a plurality of sub-displays that each contain an array of pixels, characterized in that it further comprises a central controller hardware and software block containing software to control the display system and to generate control data and video signals to be displayed on the display; a digitizer that converts said control data and video signals to a digital signal compatible with the display; whereby the digitized control data and video signals are passed from one sub-display to the next, and whereby each sub-display is a control unit capable of controlling the individual pixels of said control unit as a function of its position within the display and of the received control data and video signals.

Because the pixels can be controlled individually, the display can be configured using a suitable software application, without the need of redesigning the display.

Furthermore, because the video signals are controlled as a function of the position of the control units within the display, and hence as a function of each individual pixel, a predefined or regularly spaced pixel disposition is not necessarily required.

Preferably the pixels are positioned on modules which contain a number of pixels and which have dimensions that are relatively small, so that these modules can be assembled to form displays having any 2D or 3D shape.

Additionally the modules of the display can be arranged in a standalone manner, sufficiently far apart, with only an electrical connection to the overall display, so that the display has the appearance of being transparent.

Such a transparent display structure is useful, for example, as installed on the side of a building, where it is not desirable to obstruct windows and where it is desirable to have low wind resistance. Thus, it is possible to lower wind loads, to integrate displays in artwork or constructions without disturbing aspect or outlook of said artwork/construction while the display is switched off, to overlay the display with static existing backgrounds, to allow objects to protrude through the display, etc.

The present invention also relates to a method of operating a large-area display system according to the invention, characterized in that said method includes the steps of applying power to the display; determining whether the display is to be configured or reconfigured; determining the hardware configuration; setting the desired spacing of the picture elements; reading the EEPROM for obtaining stored production data and factory light output measurements, as well as color coordinates for each pixel within modules; transmitting and distributing video signals and control date to the display; parsing the video data, and transmitting the video data stream to the pixel clusters.

### BRIEF DESCRIPTION OF THE DRAWINGS

With the intention of better showing the characteristics of the invention, hereafter, as an example without any limitative character, a preferred form of embodiment is described of a pixel module according to the invention and a display with such pixel modules, with reference to the accompanying drawings, wherein:
figure 1 is a functional block diagram of a configurable large-area LED display system in accordance with the invention;
figure 2 is a functional block diagram of a control unit for use in the configurable large-area LED display system of the present invention;
figure 3 is a flow diagram of a method of operating the configurable large-area LED display system of the present invention.

### DETAILED DESCRIPTION OF A PREFERRED EMBODIMENT

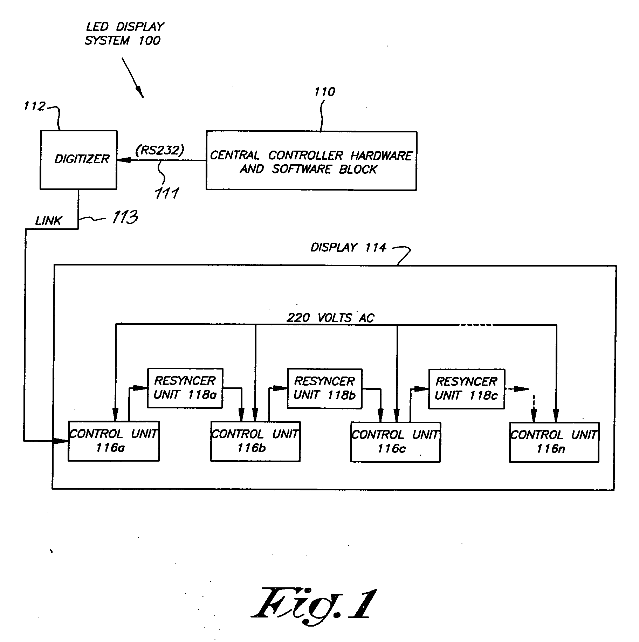

Figure 1 is a functional block diagram of a configurable large-area LED display system 100 in accordance with the invention. While the specific embodiment of the display concept of the present invention is demonstrated by use of LED display system 100, any kind of addressable display technology may be used, be it phosphorescent, electroluminescent, organic/inorganic emissive, reflective or other known display technologies.

LED display system 100 includes a central controller hardware and software block 110, a digitizer 112, and a display 114. Display 114 further includes a plurality of control units 116, for example, control units 116a through 116n; and a plurality of resynchronizer (resyncer) units 118, for example, resyncer units 118a through 118x.

For the purposes of this description, n represents an indefinite value. An external resyncer unit is only used if the distance between two control units is too large. So x can be any value smaller than n.

Central controller hardware and software block 110 is representative of any standard processing device, such as a personal computer, laptop or host computer, capable of running the system control software for operating LED display system 100. Central controller hardware and software block 110 functions as the system-level controller of LED display system 100. The software for controlling LED display system 100 resides within central controller hardware and software block 110. Central controller hardware and software block 110 is electrically connected to digitizer 112 via a standard RS-232 connection 111, through which a communications link is established.

Digitizer 112 is a well-known device that converts any video signal to a digital format that can be displayed by LED display system 100. Digitizer 112 serves as an "input manager" for display 114. Various video sources, such as those from central controller hardware and software block 110, that provide signals to be displayed upon display 114 may be connected to digitizer 112. Digitizer 112 converts these input signals to a digital signal that is compatible with display 114.

The communications link 113 between digitizer 112 and control unit 116a of display 114 is via, for example, a fiber link, which is a digital fiber optic transmission system. The fiber link may cover very long distances and has a very high bandwidth. The fiber link transmits not only the video signals but also the communication to display 114.

Display 114 is representative of any modular, user-configurable LED display formed of a collection of sub-displays, i.e., control units 116. Display 114 is customizable to any size, dimension or shape by adding or removing control units 116 to achieve a desired display structure that is uniquely user-defined for any given application.

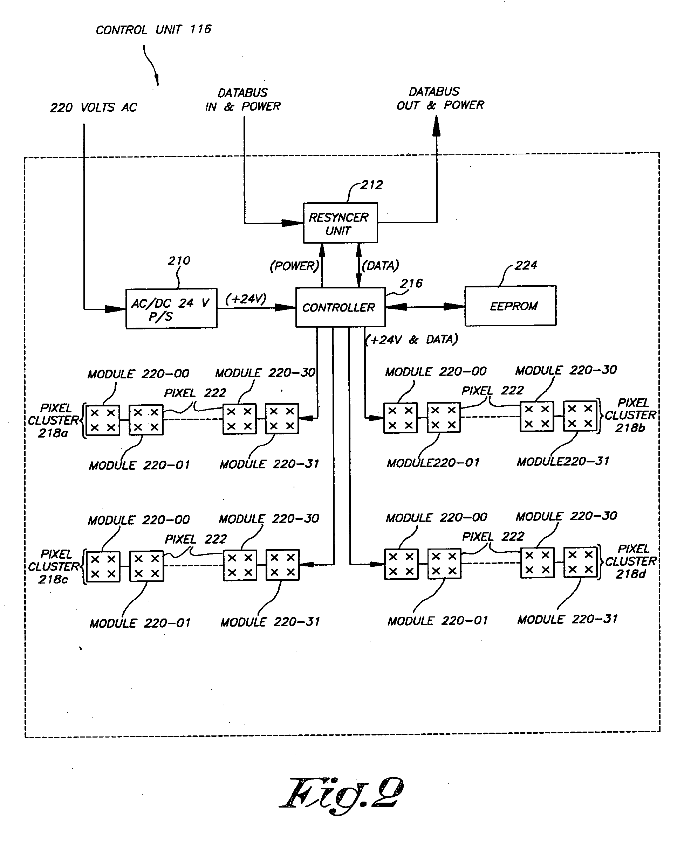

Each control unit 116 serves as a sub-display for building the overall user-defined display 114, which is formed of a collection of several control units 116. Each control unit 116 includes one or more configurable pixel clusters (not shown in figure 1) that may be collectively arranged in a variety of two-dimensional or three-dimensional shapes. Further details of control unit 116 are found in reference to figure 2.

LED display system 100 utilizes a daisy-chain method of signal distribution, i.e., serial video and control data, which is facilitated via resyncer units 118. Resyncer unit 118 is a device for receiving and re-transmitting the serial video and serial control data from one control unit 116 to the next control unit 116. Each resyncer unit 118 is optional depending upon the physical distance between one control unit 116 and the next control unit 116 in sequence. Resyncer unit 118 is needed if the spacing between one control unit 116 and the next control unit 116 exceeds a predetermined distance, for example, 5 meters. The use of resyncer units 118 ensures that a minimum signal strength is maintained for all data bus signals. Although figure 1 shows a one-for-one correlation between control units 116 and resyncer units 118, this is only illustrative. All control units 116 within display 114 may not be equidistant; resyncer unit 118 need only be present where the spacing between control units 116 exceeds the predetermined distance. Thus, there may be fewer resyncer units 118 than control units 116 present within display 114. Each resyncer unit 118 receives signals and power from its respective control unit 116.

An example of the daisy-chain method of signal distribution of LED display system 100 using resyncer units 118 is as follows. A data input signal from digitizer 112 is supplied to an input of control unit 116a. A data output signal from control unit 116a subsequently feeds a data input of resyncer unit 118a. A data output signal of resyncer unit 118a subsequently feeds a data input of control unit 116b.

A data output signal from control unit 116b subsequently feeds a data input of resyncer unit 118b. A data output signal of resyncer unit 118b subsequently feeds a data input of control unit 116c, and so on through control unit 116n.

Figure 2 is a functional block diagram of control unit 116 for use in large-area LED display system 100 of the present invention. Control unit 116 includes an AC-to-DC (AC/DC) converter 210, a resyncer unit 212, and a controller 216 driving a plurality of pixel clusters 218. Each pixel cluster 218 includes a plurality of light-emitting elements, i.e., a plurality of pixels 222, which are arranged into a plurality of modules 220 that each include four pixels 222. For example, a pixel cluster 218a includes thirty-two modules 220, i.e., modules 220-00 through 220-31, each of which includes four pixels 222; a pixel cluster 218b includes thirty-two modules 220, i.e., modules 220-00 through 220-31, each of which includes four pixels 222; a pixel cluster 218c includes thirty-two modules 220, i.e., modules 220-00 through 220-31, each of which includes four pixels 222; and a pixel cluster 218d includes thirty-two modules 220, i.e., modules 220-00 through 220-31, each of which includes four pixels 222.

Finally, control unit 116 includes an EEPROM 224.

AC/DC 24V power supply 210 is any standard AC/DC power supply having a universal AC input range and for example a 24-volt DC output with a maximum output current of, for example, 4 amps. An example AC/DC 24V power supply 210 is a switch mode power supply with power factor correction, such as a Hitron model HVP103-240042. The 220-volt AC bus is common to the inputs of all AC/DC 24V power supplies 210 of all control units 116. There are one or more AC/DC 24V power supplies 210 associated with each control unit 116. The number of AC/DC 24V power supplies 210 associated with each control unit 116 depends on the number of pixel clusters 218 within that control unit 116. AC/DC 24V power supply 210 provides power for modules 220 wherein a DC-to-DC down-conversion occurs. A more detailed description of the electrical functions of modules 220 is found with respect to another patent application in the name of the same applicant. Additionally, a more detailed description of the physical hardware implementation of modules 220 is found in regard to yet another patent application in the name of the same applicant.

Resyncer unit 212 is identical in function to resyncer unit 118, but is located internally to control unit 116 rather than externally. Resyncer unit 212 is a device for receiving and re-transmitting the serial video and serial control data directly from one control unit 116 to the next control unit 116 as long as the spacing is less than a predetermined distance. More specifically, resyncer unit 212 receives a DATABUS IN signal, which is representative of serial video and serial control data, and transmits this data to the next device in sequence via a DATABUS OUT signal. The serial video data is red, green, and blue data containing the current video frame information to be displayed on control unit 116. Additionally, the serial control data provides control information to control unit 116, such as color temperature, gamma and imaging information Signals associated with the DATABUS IN and DATABUS OUT use, for example, digital video interface (DVI) protocol and RS-232 protocol.

Controller 216 is a standard microprocessor device, such as a Philips 8051 8-bit microcontroller or a Motorola 6816 16-bit microcontroller, or alternatively a custom controller within a field programmable gate array (FPGA) device. Controller 216 manages and distributes the video data by receiving and parsing the DATA IN into specific packets associated with the location of a given module 220 of a given control unit 116 of LED display system 100. Algorithms running on controller 216 facilitate the process of identifying the portion of the serial DATA IN signal that belongs to its physical portion of LED display system 100. Additionally, controller 216 manages the pulse width modulation (PWM) associated with driving pixels 222 of each module 220. For example, instead of allowing any dead time following the completion of the PWM cycles to occur entirely at the end of the frame, which may be visible to the viewer in the form of "flicker," controller 216 distributes this dead time across all PWM cycles, thereby rendering this dead time unnoticeable to the viewer. (Note: a frame is representative of a single image in a sequence of images, as is well-known.) Furthermore, under the software control of central controller hardware and software block 110, controller 216 manages whether there is space or not between modules 220 for the given application of LED display system 100. For example, an image may be "stretched" by simply skipping one or more physical modules 220 within display 114 in a linear fashion. Thus, each controller 216 may be programmed to distribute the video data stream accordingly to have the effect of skipping, i.e., omitting specific modules 220 from the displayed image. Controller hardware and software block 110 also performs operations for gamma, correction and contrast setting.

Modules 220 each include an array of (k x n) pixels 222 positioned on any user-defined pitch. For example, a 2x2 array of pixels 222 is shown in figure 2. Pixels 222 are representative of devices of any addressable display technology, such as standard LEDs or organic light-emitting diode (OLED) devices. Furthermore, each pixel 222 is formed of a red, a green, and a blue sub-pixel, as is well-known. Each module 220 contains a DC/DC converter (not shown) to convert the 24-volt DC input voltage to a 5-volt DC output voltage at up to 0.250 amps for powering module 220. Each module 220 also includes a set of constant current drivers (not shown) for driving its associated pixels 222. Furthermore, each module 220 contains a local storage device (not shown), such as an EEPROM, for storing production data and factory light output measurements as well as color coordinates for each pixel 222 within module 220 in the form of (x,y,Y), where x and y are the coordinates of the primary emitters and Y is defined as the brightness. During calibration all values are read from an EEPROM (not shown) within each module 220 and are then used to calculate the correction values. These calculated values are then stored in EEPROM 224 on a control unit 116. EEPROM 224 is any type of electronically erasable storage medium for pervasively storing information. For example, EEPROM 224 may be a Xicor or Atmel model 24C16 or 24C164.

In the example shown in figure 2, modules 220-00 through 220-31 of pixel cluster 218a and modules 220-00 through 220-31 of pixel cluster 218b are physically arranged from left to right to form a first contiguous string of sixty-four picture elements. Below this first string, modules 220-00 through 220-31 of pixel cluster 218c and modules 220-00 through 220-31 of pixel cluster 218d are physically arranged from left to right to form a second contiguous string of sixty-four picture elements. In this way a 64x2 array of modules 220 is formed. Furthermore, since each module 220 contains a 2x2 array of pixels 222, the result is that control unit 116 contains a 128x4 array of pixels 222. The physical arrangement of modules 220 is customizable to any size, dimension, or shape to achieve the desired display structure, such as a 3D display, that is uniquely user-defined for any given application.

In each case, modules 220-00 through 220-31 are daisy-chained together for shifting the appropriate video data, which is provided by controller 216, from one module 220 to the next. The video data control is dependent upon the x and y color coordinates for each module 220 within control unit 116 that define the boundaries of the image being displayed by each respective module 220 relative to the entire display 114. More specifically, a first output of controller 216 supplies the serial video data stream to module 220-31 of pixel cluster 218a, which is then transmitted sequentially along modules 220 of pixel cluster 218a until module 220-00 receives its video data. A second output of controller 216 supplies the serial video data stream to module 220-00 of pixel cluster 218b, which is then transmitted sequentially along modules 220 of pixel cluster 218b until module 220-31 receives its video data. Likewise, a third output of controller 216 supplies the serial video data stream to module 220-31 of pixel cluster 218c, which is then transmitted sequentially along modules 220 of pixel cluster 218c until module 220-00 receives its video data. Finally, a fourth output of controller 216 supplies the serial video data stream to module 220-00 of pixel cluster 218d, which is then transmitted sequentially along modules 220 of pixel cluster 218d until module 220-31 receives its video data. In each case, controller 216 must deliver the serial video data stream in the proper order depending upon whether it is shifted from module 220-31 to module 220-00, as is the case for pixel clusters 218a and 218c, or alternatively from module 220-00 to module 220-31, as is the case for pixel clusters 218b and 218d, all based upon the associated x and y color coordinates.

With reference to figures 1 and 2, the operation of LED display system 100 is as follows. Power is applied to all control units 116 of display 114 via AC/DC 24V power supplies 210. Central controller hardware and software block 110 reads each EEPROM of each module 220 to determine the precise hardware that is connected within display 114. For the given application, since the mechanical distance cannot be automatically detected by central controller hardware and software block 110,the spacing of the picture elements within display 114 is set by the user within central controller hardware and software block 110. Also, whether any "skipping" or stretching (and how many pixels) of modules 220 must occur in generating the display image is set by the user within central controller hardware and software block 110. Subsequently, central controller hardware and software block 110 transmits image and control data to display 114 via digitizer 112 accordingly. The serial video and control data is passed from one control unit 116 to the next via the DATABUS IN and DATABUS OUT of each respective internal resyncer unit 212 or, alternatively, via the DATABUS IN and DATABUS OUT of the optional external resyncer units 118, as shown in figure 1.

Controller 216 of each respective control unit 116 within LED display system 100 receives the video data stream and subsequently parses this information into specific packets associated with the location of the given controller 216 relative to the entire display 114. Algorithms running on controller 216 facilitate the process of identifying the portion of the serial DATABUS IN signal that belongs to its physical portion of display 114. Subsequently, each respective controller 216 distributes the appropriate serial video data stream to its associated pixel clusters 218, then to modules 220, and finally to pixels 222 according to the respective x and y color coordinates. This video data transfer operation occurs for each video frame under the control of central controller hardware and software block 110 of LED display system 100, thereby creating an image for viewing upon display 114.

The arrangement of pixel clusters 218 and associated modules 220 therein is not limited to that shown in figure 2. The orientation of pixel clusters 218 within display 114 may be horizontal as shown in figure 2 or may alternatively be vertical. In either case, the resulting data is always ordered left to right via controller 216, thus software algorithms within each respective controller 216 adjust the video data stream to the specific orientation of each pixel cluster 218 accordingly.

Furthermore, the number of pixel clusters 218 and/or modules 220 is not limited to that shown in figure 2. Those skilled in the art will recognize that the maximum number of pixel clusters 218 and/or modules 220 may vary depending upon various design parameters.

A first design consideration is for example the power distribution system, i.e., the maximum current rating of any power cabling and connectors associated with the physical implementation of multiple control units 116 having multiple modules 220 within display 114. The current ratings of the power distribution system are a limiting factor as to the maximum number of pixel clusters 218 and/or modules 220 allowed.

A second design consideration that effects maximum number of pixel clusters 218 and/or modules 220 allowed relates to the associated PWM for driving pixels 222 of modules 220. The length of the video data stream, and thus the number of modules 220 within a given control unit 116, must be suitably short to occur within the allowable time of a given frame, as each module 220 must be addressed within this limited amount of time so as to avoid overlapping into the next frame. Variables associated with the PWM include the number of constant current drivers within modules 220, the frequency of the data and/or grayscale clocks, and the resolution, as is well-known.

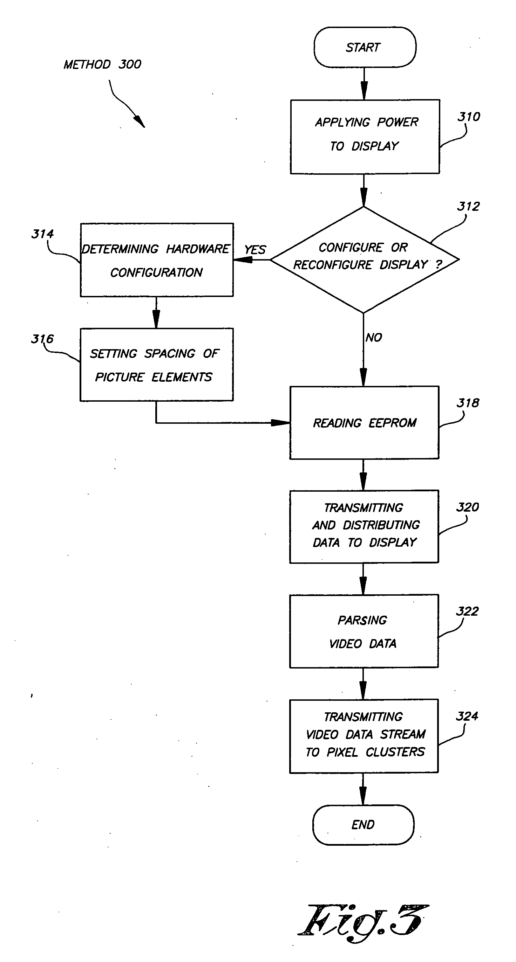

Figure 3 is a flow diagram of a method 300 of operating LED display system 100 in accordance with the invention. Method 300 includes the following steps:
Step 310: Applying power to display.
   In this step, under the control of central controller hardware and software block 110, power is applied to all control units 116 of display 114 via AC/DC 24V power supplies 210. Method 300 proceeds to step 312.
Step 312: Configure or reconfigure display?
   In this decision step, it is determined whether display 114 has been configured. If display 114 has not yet been configured or if the user chooses to reconfigure display 114 (e.g., choose to stretch the image in a different way or not to stretch the image anymore), method 300 proceeds to step 314. Alternatively, if display 114 is already configured and the user does not wish to reconfigure display 114, method 300 proceeds to step 318.
Step 314: Determining hardware configuration.
   In this step, central controller hardware and software block 110 checks how many control units 116 are connected to digitizer 112. Each control unit 116 receives an address. Also each control unit 116 receives a vertical and horizontal start position, e.g., define cutout of the data. These settings are stored in the EEPROM 224 of each control unit 116. Method 300 proceeds to step 316.
Step 316: Setting spacing of picture elements.
   In this step, via central controller hardware and software block 110 the user sets the spacing of the picture elements, i.e., stretching or skipping. If skipping is selected the user sets how many pixels that are skipped. These settings are stored in the EEPROM 224 of controller 216. Method 300 proceeds to step 318.
Step 318: Reading EEPROM.
   In this step, the hardware configuration and the spacing of the picture elements are read by central controller hardware and software block 110 from the EEPROM 224 of controller 216. Method 300 proceeds to step 320.
Step 320: Transmitting and distributing data to display.
   In this step, central controller hardware and software block 110 transmits image and control data to display 114 via digitizer 112 according to the previously determined hardware configuration and spacing. The serial video and control data is passed from one control unit 116 to the next via the DATABUS IN and DATABUS OUT of each respective internal resyncer unit 212 or, alternatively, via the DATABUS IN and DATABUS OUT of each optional external resyncer unit 118, as shown in figure 1. Method 300 proceeds to step 322.
Step 322: Parsing video data.
   In this step, controller 216 of each respective control unit 116 within LED display system 100 receives the video data stream and subsequently parses this information into specific packets associated with the location of the given controller 216 relative to the entire display 114. Algorithms running on controller 216 facilitate the process of identifying the portion of the serial DATABUS IN signal that belongs to its physical portion of display 114. Method 300 proceeds to step 324.
Step 324: Transmitting video data stream to pixel clusters.
   In this step, each respective controller 216 distributes the appropriate serial video data stream to its associated pixel clusters 218, and then modules 220, and then pixels 222 according to the respective x and y color coordinates. More specifically, each controller 216 supplies the serial video data stream to module 220-31 of pixel cluster 218a, which is then transmitted sequentially down the string of modules 220 until module 220-00 of pixel cluster 218a receives its video data. Each controller 216 then supplies the serial video data stream to module 220-00 of pixel cluster 218b, which is then transmitted sequentially down the string of modules 220 until module 220-31 of pixel cluster 218b receives its video data. Likewise, each controller 216 supplies the serial video data stream to module 220-31 of pixel cluster 218c, which is then transmitted sequentially down the string of modules 220 until module 220-00 of pixel cluster 218c receives its video data. Finally, each controller 216 supplies the serial video data stream to module 220-00 of pixel cluster 218d, which is then transmitted sequentially down the string of modules 220 until module 220-31 of pixel cluster 218d receives its video data. In each case, controller 216 must deliver the serial video data stream in the proper order depending upon whether it is shifted from module 220-31 to module 220-00, as is the case for pixel clusters 218a and 218c, or alternatively from module 220-00 to module 220-31, as is the case for pixel clusters 218b and 218d, all based upon the associated x and y color coordinates. Method 300 ends.

It is understood that the video data transfer operation of steps 320 through 324 occurs under the control of central controller hardware and software block 110 of LED display system 100 for each video frame, thereby creating an image for viewing upon display 114.

In summary, configurable large-area LED display system 100 of the present invention provides control of small individual picture elements, i.e., modules 220 and pixels 222 of each control unit 116, which may be physically arranged to allow 2D and 3D shapes to be formed.

Furthermore, LED display system 100 of the present invention is software configurable for providing variable distance between modules 220 and pixels 222 of each control unit 116 without display redesign. More specifically, LED display system 100 of the present invention does not require any predefined or regularly spaced position for the individual picture elements.

Finally, in a low-resolution display application, the small individual picture elements, i.e., modules 220 of each control unit 116, of LED display system 100 may be arranged sufficiently far apart to have the appearance of being a transparent structure, where each module 220 is mounted physically in a standalone manner, with only an electrical connection to the overall display 114.

The present invention is in no way limited to the form of embodiment described by way of example and represented in the figures, however, such a display system as well as a control unit according to the invention, can be realized in various forms without leaving the scope of the invention.

## Claims

1. Configurable large-area display system with a display (114) comprising a plurality of sub-displays that each contain an array of pixels (122), **characterized in that** it further comprises a central controller hardware and software block (110) containing software to control the display system (100) and to generate control data and video signals to be displayed on the display (114); a digitizer (112) that converts said control data and video signals to a digital signal compatible with the display (114); whereby the digitized control data and video signals are passed from one sub-display to the next, and whereby each sub-display is a control unit (116) capable of controlling the individual pixels (122) of said control unit (116) as a function of its position within the display (114) and of the received control data and video signals.

2. Configurable large-area display system according to claim 1, **characterized in that** central controller hardware and software block (110) is electrically connected to digitizer (112) via a standard RS-232 connection (111).

3. Configurable large-area display system according to claim 1, **characterized in that** the digitizer (112) is connected to the display (114) by means of a fiber link (113).

4. Configurable large-area display system according to claim 1, **characterized in that**, in the event that the distance between two successive control units (116) exceeds a predetermined distance, an intermediate resyncer (118) is used between said two control units (116) to receive and retransmit the control data and video signals.

5. Configurable large-area display system according to claim 1, **characterized in that** each control unit (116) further includes an AC-to-DC power supply (210), a resynchronizer unit (212) to receive and transmit data, an EEPROM (224), and a controller (216) driving a plurality of pixel clusters (218) that each includes a plurality of modules (220), each containing an array of light-emitting pixel elements (222).

6. Configurable large-area display system according to claim 5, **characterized in that** the EEPROM (224) contains production data and factory light output measurements, as well as color coordinates for each pixel (222) within modules (220).

7. Configurable large-area display system according to claim 5, **characterized in that** the controller (216) contains algorithms to parse the control data and video signals received into specific packets associated with the location of a given module (220) within the concerned control unit (116) of display system (100).

8. Configurable large-area display system according to claim 5, **characterized in that** the controller (216) is provided with means for managing the pulse width modulation associated with driving pixels (222) of each module (220).

9. Configurable large-area display system according to claim 5, **characterized in that** the control unit comprises four pixel clusters (218), each pixel cluster (218) containing 32 modules (220) that are suitably interconnected for a daisy-chain signal distribution.

10. Configurable large-area display system according to claim 5, **characterized in that** each module (220) comprises an array of 2 x 2 pixels (222).

11. Configurable large-area display system according to claim 1, **characterized in that** the pixels (222) are light-emitting diodes (LED).

12. Configurable large-area display system according to claim 1, **characterized in that** the dimensions of the modules (220) are relatively small, such that they can be assembled to form displays having any 2D or 3D shape.

13. Configurable large-area display system according to claim 1, **characterized in that** the modules (220) of the display (114) are arranged in a standalone manner so that the display (114) apparently has a transparent structure.

14. Control unit for use in a configurable large-area display system according to any of the preceding claims, **characterized in that** it is configured as a sub-display comprising a plurality of pixel clusters (218), each composed of a plurality of pixel modules (220) that are sequentially interconnected with each other and each containing an array of light-emitting pixel elements (122).

15. Control unit according to claim 14, **characterized in that** it further includes an AC-to-DC power supply (210), a resynchronizer unit (212) to receive and transmit control data and video signals; a controller (216) connected to the resynchronizer unit (221) and driving the pixels (222) contained in the modules (220) and clusters (218); and an EEPROM (224) connected to the controller (216).

16. Control unit according to claim 15, **characterized in that** the EEPROM (224) contains production data and factory light output measurements, as well as color coordinates for each pixel (222) within modules (220).

17. Control unit according to claim 15, **characterized in that** the controller (216) contains algorithms to parse the control data and video signals received into specific packets associated with the location of a given module (220) within the concerned control unit (116) of display system (100).

18. Control unit according to claim 14, **characterized in that** the controller (216) is provided with means for managing the pulse width modulation associated with driving pixels (222) of each module (220).

19. Control unit according to claim 14, **characterized in that** the pixels (222) are light-emitting diodes (LED).

20. Method of operating a large-area display system according to any of the claims 1 to 13, **characterized in that** said method includes the steps of applying power to the display (114); determining whether the display (114) is to be configured or reconfigured; determining the hardware configuration; setting the desired spacing of the picture elements (222); reading the EEPROM (224) for obtaining stored production data and factory light output measurements, as well as color coordinates for each pixel (222) within modules (220); transmitting and distributing video signals and control date to the display; parsing the video data, and transmitting the video data stream to the pixel clusters (218).

21. Method of operating according to claim 20, **characterized in that**, depending on the desired spacing, some intermediate pixels (222), which are spaced apart less further then desired, are ignored for use.
